# EUROPEAN PATENT APPLICATION

(11) **EP 3 449 776 A1**
(43) Date of publication of application: **06.03.2019**
(21) Application number: 17188782.1
(22) Date of filing: 31.08.2017
(51) Int. Cl.: A47G 9/02, A01K 13/00

(54) **THERAPEUTIC BLANKET WITH A RING MESH**

(71) Applicant: Nilsson, Rasmus, 411 29 Göteborg (SE); Brar, Max, 122 44 Hägersten (SE)
(72) Inventor: Nilsson, Rasmus, 411 29 Göteborg (SE); Brar, Max, 122 44 Hägersten (SE)
(74) Representative: AWA Sweden AB

(57) **Abstract**

The present invention relates to a therapeutic blanket (1) comprising a first textile layer (11) and a layer of link elements (2) for increasing the weight of the therapeutic blanket (1). The layer of link elements (2) is attached to the first textile layer (11), and comprises a plurality of ring shaped elements (21). At least one of the plurality of ring shaped elements (21) forms a ring shaped node (21a), each ring shaped node (21a) being connected to at least four other ring shaped elements (21) or at least four interconnecting elements (23), thereby forming a ring mesh from the layer of link elements (2). Using a ring mesh to increase the weight of the blanket (1) mitigates the risk that parts of the user's body are not subjected to the desired pressure.

## Description

### FIELD OF THE INVENTION

The present invention relates to therapeutic blankets having a layer of link elements for increasing the weight of the blanket. It particularly relates to therapeutic blankets having a ring mesh for increasing the weight of the blanket.

### BACKGROUND OF THE INVENTION

Weighted therapeutic blankets are designed to put more pressure on a user's body than a conventional blanket. Today weighted therapeutic blankets are used as a therapy for a number of conditions and symptoms related to difficulties in finding rest and sleeping. These symptoms may for example be related to hyperactivity, ADHD, Asperger's syndrome, autism, insomnia, lack of body awareness, and other neuropsychical diagnoses. The pressure applied by the weighted blanket helps by increasing the user's awareness of her/his body, which often calms the user.

Weighted therapeutic blankets are not only used by humans, but may also be used by animals. For example, they may be used for trotting horses, to help them relax and focus before a race. Another field of use is for racing dogs, as well as hyperactive dogs, dogs suffering from stress or anxiety, and dogs that are difficult to control in loud environments.

Today there are various different types of weighted therapeutic blankets on the market. The main principle of these is that a weight element is sown into channels or pockets between two layers of textile. The weight element may for example be chains, plastic balls or pellets.

A drawback of using plastic balls or pellets sown into patches in the blanket is that the blanket becomes thick, which makes it space consuming, warm and difficult to handle. Blankets of this type do not breathe well, which results in that the filling material collects moist, and takes a long time to dry. Using chains sown into channels makes it possible to regulate the thickness of the blanket, and it becomes less space consuming. However, chains in channels do not apply an evenly distributed pressure to the user's body. Pressure will only be applied where the chains are located, and only on top of the user's body. This results in that parts of the user's body which may be placed between two chains, such as the legs, may not receive any additional pressure, at least temporarily. The therapeutic effect of the blanket with chains may therefore be at least temporarily reduced. There is therefore a need for providing a blanket having an improved pressure distribution, both spatially and in time, and hence an improved therapeutic effect.

### SUMMARY OF THE INVENTION

It is an object of the present invention to alleviate at least some of the mentioned drawbacks of the prior art and to provide an improved therapeutic blanket with a weight element. This and other objects, which will become apparent in the following, are accomplished by a therapeutic blanket as defined in the accompanying independent claim.

The term exemplary should in this application be understood as serving as an example, instance or illustration.

The present invention is based on the realisation that using a ring mesh, also known as ring mail or chain mail, to increase the weight of the blanket mitigates the risk that parts of the user's body are not subjected to the desired pressure. It further provides the possibility for a two-dimensional pressure to be applied to the user, since a two-dimensional ring mesh may also apply pressure to the sides of the user's body, and not only on top of the user as in prior art.

According to a first aspect of the present invention, a therapeutic blanket is provided. The blanket comprises a first textile layer, and a layer of link elements for increasing the weight of the therapeutic blanket. The layer of link elements is attached to said first textile layer, wherein said layer of link elements comprises a plurality of ring shaped elements. At least one of said plurality of ring shaped elements forms a ring shaped node, and each ring shaped node is connected directly to at least four other ring shaped elements or to at least four other ring shaped elements via at least four interconnecting elements, thereby forming a ring mesh from said layer of link elements.

The therapeutic blanket may have a rectangular shape, which is suitable for use by a human. It may further have a shape adapted for lying on a horse back. For human use, the blanket may suitably have a weight of between 4-12 kg, depending on what is desired by the user. A weight outside of this span is also conceivable.

The first textile layer may be made of a flame retardant material. For example, it may be made of a material called Trevira® CS. In other embodiments, the first textile layer may be made of any other suitable textile material.

It should be noted that ring shaped does not in any way imply circular. By ring shaped element is meant an element having the shape of a closed loop. The ring shaped elements may for example be circular, oval, square or polygonal.

By ring mesh is meant a two-dimensional network of rings, wherein the ring shaped elements are connected either directly to each other, or indirectly by means of interconnecting elements.

According to an exemplary embodiment of the present invention, said layer of link elements is attached to said first textile layer without the use of channels. The layer of link elements may for example be attached by stitching, using clasp devices, welding or adhering. The layer of link elements may be directly or indirectly attached to the first textile layer. For example, the layer of link elements may be attached to a textile strip or frame, and the textile strip or frame may then be attached to the first textile layer. By not having link elements constrained to channels, an improved distribution of the pressure applied to the user's body may be achieved. The absence of channels also implies that less work is required to manufacture the blanket, and the manufacturing process may therefore be less expensive and more cost effective.

According to an exemplary embodiment of the present invention, said therapeutic blanket has a surface area, and the weight of said layer of link elements is evenly distributed across a majority of said surface area. In other words, the plurality of ring shaped elements is evenly distributed across a majority of said surface area. This reduces the risk of parts of the user's body, such as the legs, not being exposed to the desired pressure.

According to an exemplary embodiment, the weight of said layer of link elements is continuously evenly distributed across a majority of said surface area. According to another exemplary embodiment, the weight of said layer of link elements is discretely evenly distributed across a majority of said surface area. In other words, the weight may be distributed over a finite number of points, which are evenly distributed across a majority of said surface area. The weight of the layer of link elements in each of these points may vary, but the overall weight may still be evenly distributed across a majority of said surface area.

According to an exemplary embodiment of the present invention, at least two of said plurality of ring shaped elements form ring shaped nodes, and the distance between two adjacent ones of said ring shaped nodes is 5 - 50 mm. The distance may preferably be 10 - 40 mm, or most preferably 20 - 30 mm. The advantage of having a maximum distance of 50 mm between two adjacent ring shaped nodes is that it results in a more evenly distributed pressure being applied to the user, compared to when using larger distances. Since the ring shaped nodes are connected to the rest of the ring mesh in two dimensions, they enhance the therapeutic squeezing (hugging) effect on the sides of the user's body, and hence an improved effect may be achieved if the ring shaped nodes are not placed further apart than 50 mm.

According to an exemplary embodiment of the present invention, said interconnecting elements have a different shape and/or size than said ring shaped elements. This is advantageous since it enables having a more flexible ring mesh compared to if all elements are of the same shape and size. It may be beneficial since it may be cheaper and/or easier to produce. According to another exemplary embodiment, the interconnecting elements may have the same shape and/or size as the ring shaped elements.

According to an exemplary embodiment of the present invention, the therapeutic blanket further comprises a second textile layer, the layer of link elements being arranged between said first and second textile layers. This is advantageous since it enhances user comfort. According to another exemplary embodiment of the present invention, the therapeutic blanket further comprises a third textile layer attached to the second textile layer, and a layer of padding being placed between said second textile layer and said third textile layer. The padding and third textile layer may further enhance user comfort.

According to an exemplary embodiment of the present invention, at least one of said textile layers comprises flame retardant material. This is desirable since the blankets can be used in psychiatric care, where flame retardant blankets may be required. According to another exemplary embodiment, said layer of padding may also be made of a flame retardant material.

According to an exemplary embodiment of the present invention, said layer of link elements comprises a plurality of peripheral ring shaped elements. Said therapeutic blanket further comprises at least one textile strip fixed to at least one peripheral edge portion of said first textile layer, and a plurality of fastening elements fixed to said at least one textile strip for attachment to a plurality of peripheral ring shaped elements of said layer of link elements. The textile strip(s) may be made of a coarser textile than said first textile layer. If textile strips are provided around all peripheral edge portions of the first textile layer, it may be described as a textile frame. The textile frame may comprise multiple textile strips, or be made of a single textile strip. An advantage of attaching the layer of link elements to a textile strip and not directly to said first textile layer is that it may be easier to manufacture, as well as more durable.

According to an exemplary embodiment, each peripheral ring shaped element of said layer of link elements is attached to said at least one textile strip using said plurality of fastening elements. By attaching each of said peripheral ring shaped elements to the at least one textile strip, a weaker textile strip can be used compared to if only some of the peripheral ring shaped elements are attached, since the weight to be attached is distributed over more attachment points. This is advantageous since it is more cost effective compared to having a thicker and stronger textile strip.

According to an exemplary embodiment of the present invention, said layer of link elements comprises a plurality of peripheral ring shaped elements. Said therapeutic blanket further comprises at least two overlapping textile strips arranged along a peripheral edge portion of said first textile layer, and at least one of said peripheral ring shaped elements is sandwiched and fixed between said at least two overlapping textile strips. The fixation of the peripheral ring shaped element may for example be achieved by stitching, adhering, welding, or riveting. The advantage of having two overlapping textile strips and sandwiching and fixing the ring shaped elements in between the textile strips is that it may be cheaper and/or easier to manufacture compared to using separate fastening elements. Using rivets to fixate the peripheral ring shaped elements between the at least two overlapping textile strips may be advantageous since it can be less work intensive, and the risk for damaging needles, which may be an issue if stitching is used, is alleviated.

According to an exemplary embodiment of the present invention, the size of the interconnecting elements is 20 - 75 % of the size of the ring shaped elements. By size of the interconnecting elements is meant the length of the element, or in other words the maximum distance between two ring shaped elements that are connected by an interconnecting element. By size of the ring shaped elements is meant the mean diameter of the element, or the width/length/edge to edge distance of the element.

According to an exemplary embodiment of the present invention, said ring shaped elements and said interconnecting elements are made of metal and/or a plastic material. This is advantageous since there are metal and plastic materials that can provide the desired weight without being too bulky, while at the same time being strong enough to stand daily use and washing of the blanket. According to one exemplary embodiments, all ring shaped elements and interconnecting elements may be made of the same material. According to another exemplary embodiment, the ring shaped elements and the interconnecting elements may be made of different materials. According to another exemplary embodiment, different materials may be used for different ring shaped elements and interconnecting elements.

According to an exemplary embodiment of the present invention, said layer of link elements comprises MxN ring shaped elements and (M-2)x(N-2) ring shaped elements form ring shaped nodes, wherein M and N are positive integers larger than 2. M and N may be the same number. In other words, in a symmetrical layer of link elements comprising rows and columns of ring shaped elements, all ring shaped elements except the peripheral elements along the edges of the layer, form ring shaped nodes. This is beneficial since it allows for an even two-dimensional distribution of the pressure over the whole layer of link elements.

According to an exemplary embodiment of the present invention, the blanket may be part of a sleeping bag. According to another exemplary embodiment, the present invention may be part of a toes muff or foot muff for use with a baby stroller.

These and other features and advantages of the present invention will in the following be further clarified with reference to embodiments described hereinafter.

### BRIEF DESCRIPTION OF THE DRAWINGS

This and other aspects of the present invention will now be described in more detail, with reference to the appended drawings showing at least three different exemplary embodiments of the therapeutic blanket as defined in the independent claim.
Figure 1 is an exploded view showing an exemplary embodiment of a therapeutic blanket according to the present invention.
Figure 2a is a top view of a portion of an exemplary embodiment of a layer of link elements, for use in a therapeutic blanket according to the present invention.
Figure 2b is a top view of a portion of another exemplary embodiment of a layer of link elements, for use in a therapeutic blanket according to the present invention.
Figure 3 is a top view of a portion of another exemplary embodiment of a layer of link elements, for use in a therapeutic blanket according to the present invention.
Figure 4 is a perspective view showing an exemplary embodiment of how a layer of link elements may be attached in a therapeutic blanket according to the present invention.
Figure 5 is a partial view showing another exemplary embodiment of how a layer of link elements may be attached in a therapeutic blanket according to the present invention.
Figure 6 is a top view of another exemplary embodiment of a therapeutic blanket according to the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

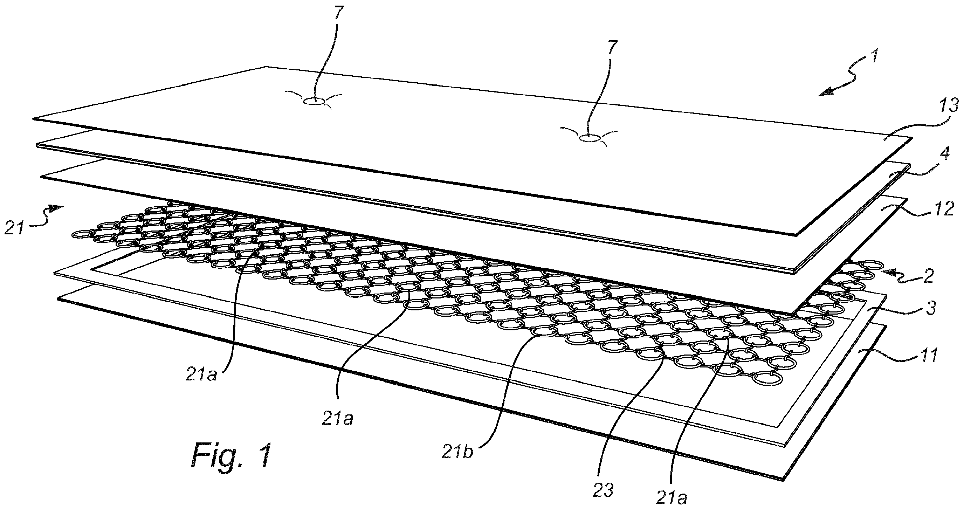

Figure 1 illustrates an exemplary embodiment of a therapeutic blanket 1 according to the present invention. The blanket comprises a first textile 11 layer, a second textile layer 12, and a third textile layer 13, sown together at their peripheral edge portions. These textile layers 11, 12, 13 may all be made of a flame retardant material. Alternatively, only one or two of the textile layers may be made of a flame retardant material, or none of them may be made of a flame retardant material. An example of a suitable flame retardant material is Trevira® CS. The textile layers 11, 12, 13 in the illustrated embodiment have a rectangular shape, which is suitable for use by a human. When using the blanket 1 for a horse or any other animal, the blanket may have a different shape. The shape of the blanket 1 is not limited to the illustrated embodiment, and should not be considered as an essential feature of the invention. Neither should the illustration be considered as made to scale in terms of the relation between the sizes of the different components.

The blanket 1 according to the illustrated exemplary embodiment further comprises a layer of link elements 2 for increasing the weight of the therapeutic blanket. The layer of link elements 2 may be arranged between the first textile layer 11 and second textile layer 12. The blanket 1 also comprises a textile frame 3, suitably made of a coarser material than the first textile layer 11, for attachment of the layer of link elements 2. The layer of link elements 2 comprises a plurality of ring shaped elements 21, and at least one of the plurality of ring shaped elements forms a ring shaped node 21 a. In the illustrated embodiment, each ring shaped node 21 a is connected to four interconnecting elements 23, thereby forming a ring mesh from said layer of link elements 2. The illustrated layer of link elements (or ring mesh) 2 comprises 10x24 ring shaped elements 21 and 8x22 ring shaped elements form ring shaped nodes 21 a. This is however only an illustrational example, and the number of ring shaped elements and ring shaped nodes may vary between blankets.

The weight of the layer of link elements 2 may be discretely evenly distributed across a majority of the surface area of the blanket. In the illustrated embodiment in Figure 1, the interconnecting elements 23 form point loads. In other words, the weight applied to the user may be approximated to a finite number of point loads applied at a surrounding area of the interconnecting elements 23. These point loads may be evenly distributed across a majority of the surface area of the blanket.

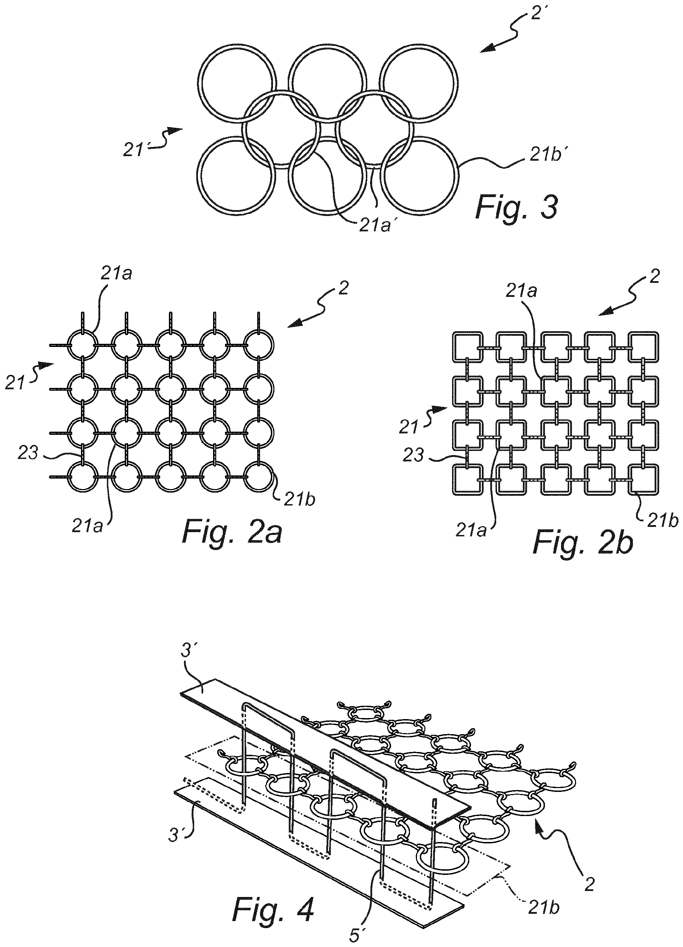

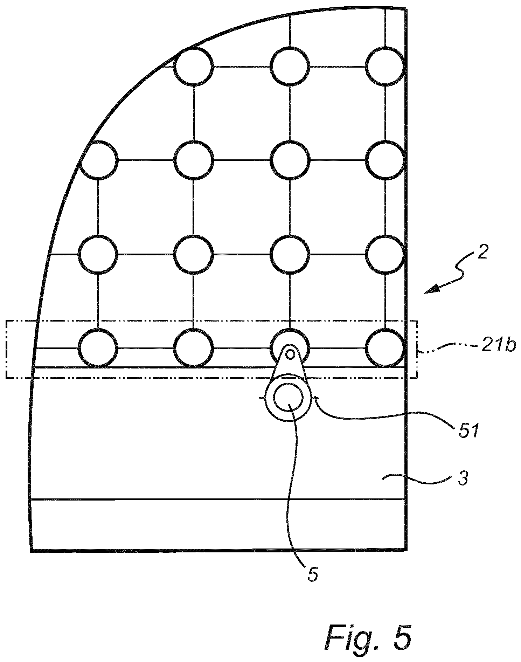

The layer of link elements 2 may also comprise peripheral ring shaped elements 21 b, which are ring shaped elements 21 that are not connected to at least four interconnecting elements 23 or at least four other ring shaped elements 21. The peripheral ring shaped elements 21 b are further discussed in relation to Figure 4 and 5.

The ring mesh illustrated in Figure 1 will be described in more detail in relation to Figure 2a. Alternative embodiments of the ring mesh are shown in Figure 2b, where the ring shaped elements 21 have a square shape, and in Figure 3, where each ring shaped node 21 a is directly connected to at least four other ring shaped elements 21.

The exemplary embodiment of the present invention illustrated in Figure 1 further comprises a layer of padding 4 being placed between the second textile layer 12 and the third textile layer 13. This layer of padding 4 may be made of any suitable material, suitably padding material of the types used in conventional blankets. If the blanket is to be used in psychiatric care, the layer of padding may suitably be made of a flame retardant material.

The therapeutic blanket illustrated in Figure 1 further comprises two anchoring points 7, where all layers of the blanket 11, 12, 13, 2, 4 are stitched together. This is done to avoid separation of the different layers. In the figure, only two anchoring points 7 are illustrated, but this number may be varied. According to one exemplary embodiment, the blanket may have such anchoring points 7 distributed over the whole surface area of the blanket, with a distance of 20-30 cm between the anchoring points 7.

Figure 2a illustrates a portion of an exemplary embodiment of a layer of link elements 2 for use in a therapeutic blanket according to the present invention. The layer of link elements 2 comprises a plurality of ring shaped elements 21 and at least one of the plurality of ring shaped elements forms a ring shaped node 21 a. Each ring shaped node 21 a is in this embodiment connected to at least four interconnecting elements 23, thereby forming a ring mesh from said layer of link elements 2. In the illustration, twelve ring shaped nodes 21 a are shown.

In the illustrated embodiment in Figure 2a, the interconnecting elements 23 have a different shape and/or size than the ring shaped elements 21. The ring shaped elements 21 are in this embodiment circular, while the interconnecting elements 23 are linear with loops at the ends. The diameter of the ring shaped elements 21 may for example be in the range of 30-70 mm, such as e.g. 50 mm, but other diameters are also conceivable. The length of the interconnecting elements 23 may be 15-35 mm, such as e.g. 25 mm, but this may also be varied. Both the ring shaped elements 21 and the interconnecting elements 23 may have different shapes than those illustrated in the figure. The ring shaped elements 21 may for example be square or polygonal, and the interconnecting 23 elements may for example be shaped like an eight.

The distance between two adjacent ones of the plurality of ring shaped nodes 21 a illustrated in Figure 2a may be 5 - 50 mm, preferably 10 - 40 mm, most preferably 20 - 30 mm. In an exemplary embodiment, the distance between two adjacent ones of the plurality of ring shaped nodes 21 a is 25 mm.

Figure 2b shows a portion of another exemplary embodiment of a layer of link elements 2 for use in a therapeutic blanket according to the present invention. This embodiment may have the same properties as the embodiment shown in Figure 2a, but in this embodiment the ring shaped elements 21 are square.

Figure 3 illustrates a portion of another exemplary embodiment of a layer of link elements 2' for use in a therapeutic blanket according to the present invention. The layer of link elements 2' comprises a plurality of ring shaped elements 21' and at least one of the plurality of ring shaped elements forms a ring shaped node 21 a'. Each ring shaped node 21 a' is in this embodiment connected to at least four other ring shaped elements 21', thereby forming a ring mesh from said layer of link elements 2'. In the illustration, two ring shaped nodes 21 a' are shown.

Figure 4 shows an exemplary embodiment of how a layer of link elements 2 may be attached in a therapeutic blanket according to the present invention. The layer of link elements 2 comprises a plurality of peripheral ring shaped elements 21 b, and the therapeutic blanket further comprises two overlapping textile strips 3' or frames arranged along a peripheral edge portion of the first textile layer. At least one of the peripheral ring shaped elements 21 b is sandwiched and fixed between the at least two overlapping textile strips 3'. In this embodiment, the layer of link elements 2, or ring mesh, is fixed between the two textile frames 3' by a seam 5'. A continuous seam 5' may be used for fixation, as in the illustrated embodiment, or single stitches around each or some of the peripheral ring shaped elements may be used. Other possible fixation means are also conceivable, such as adhering, stapling or welding. The textile frames 3' may also be attached to the first textile layer in any suitable manner, for example it may be stitched, adhered or welded.

Figure 5 shows another exemplary embodiment of how a layer of link elements 2 may be attached to a therapeutic blanket according to the present invention. The layer of link elements 2 comprises a plurality of peripheral ring shaped elements 21 b, and the therapeutic blanket further comprises at least one textile strip 3 fixed to at least one peripheral edge portion of the first textile layer. The blanket also comprises a plurality of fastening elements 5 fixed to the at least one textile strip 3 for attachment to a plurality of peripheral ring shaped elements 21 b of said layer of link elements 2. In this embodiment, the blanket comprises a single textile frame 3, as is illustrated in the embodiment in Figure 1. The fastening elements 5 may be clasp devices, such as plastic loops with a snap fastening mechanism, or any other device capable of fixing the peripheral ring shaped elements to the textile frame. For each point where the ring mesh 2 is to be fixed to the textile frame 3, there is a hole in the textile frame 51, by means of which the fastening element 5 can be anchored.

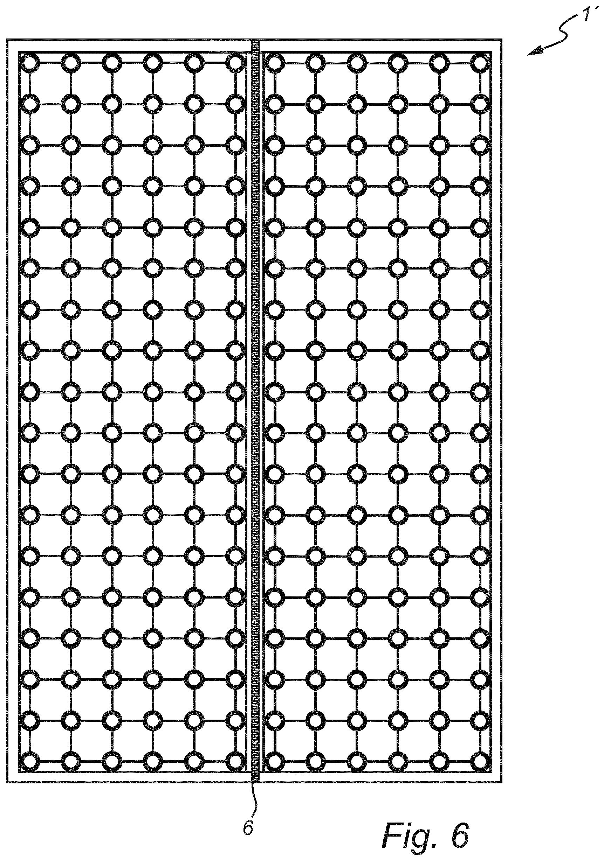

Figure 6 illustrates a second exemplary embodiment of a therapeutic blanket 1' according to the present invention. In this exemplary embodiment, the blanket 1' further comprises a zipper 6, allowing the blanket 1' to be split in two parts. This is beneficial for blankets having a weight higher than what regular washing machines are capable of washing. By being able to split the blanket in two parts, the two parts can be washed separately without exceeding the maximum weight for the washing machine.

The person skilled in the art realizes that the present invention by no means is limited to the embodiments described above. The features of the described embodiments may be combined in different ways, and many modifications and variations are possible within the scope of the appended claims. For example, the ring mesh may not cover the whole surface area of the blanket. The ring mesh may be attached directly to the first textile layer without the use of a textile frame, or by a textile strip not being attached to all peripheral edge portions of the first textile layer. Further, the size and shape of the blanket may vary, and the blanket may comprise additional or fewer layers of textile and/or padding. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A therapeutic blanket (1, 1') comprising:
a first textile layer (11);
a layer of link elements (2, 2') for increasing the weight of the therapeutic blanket (1, 1'), said layer of link elements (2, 2') being attached to said first textile layer (1, 1');
wherein said layer of link elements (2, 2') comprises a plurality of ring shaped elements (21, 21') and wherein at least one of said plurality of ring shaped elements forms a ring shaped node (21 a, 21 a'), each ring shaped node being connected:
directly to at least four other ring shaped elements (21') or to at least four other ring shaped elements (21) via at least four interconnecting elements (23), thereby forming a ring mesh from said layer of link elements (2, 2').

2. The therapeutic blanket according to claim 1, wherein said layer of link elements (2, 2') is attached to said first textile (11) layer without the use of channels.

3. The therapeutic blanket according to any one of claims 1 - 2, wherein said therapeutic blanket (1, 1') has a surface area and wherein the weight of said layer of link elements (2, 2') is evenly distributed across a majority of said surface area.

4. The therapeutic blanket according to any one of the preceding claims, wherein at least two of said plurality of ring shaped elements (21, 21') form ring shaped nodes (21 a, 21 a'), and wherein the distance between two adjacent ones of said ring shaped nodes (21 a, 21 a') is 5 - 50 mm, preferably 10 - 40 mm, most preferably 20 - 30 mm.

5. The therapeutic blanket according to any one of the preceding claims, wherein said interconnecting elements (23) have a different shape and/or size than said ring shaped elements (21).

6. The therapeutic blanket according to any one of the preceding claims, further comprising a second textile layer (12), the layer of link elements (2, 2') being arranged between said first textile layer (11) and said second textile layer (12).

7. The therapeutic blanket according to claim 6, further comprising:
a third textile layer (13) attached to the second textile layer (12), and
a layer of padding (4) being placed between said second textile layer (12) and said third textile layer (13).

8. The therapeutic blanket according to claim 7, wherein at least one of said textile layers (11, 12, 13) comprises flame retardant material.

9. The therapeutic blanket according to any one of the preceding claims, wherein said layer of link elements (2, 2') comprises a plurality of peripheral ring shaped elements (21 b) and wherein said therapeutic blanket (1, 1') further comprises:
at least one textile strip (3) fixed to at least one peripheral edge portion of said first textile layer (11), and
a plurality of fastening elements (5) fixed to said at least one textile strip (3) for attachment to a plurality of peripheral ring shaped elements (21 b) of said layer of link elements (2, 2').

10. The therapeutic blanket according to any one of claims 1-8, wherein said layer of link elements (2, 2') comprises a plurality of peripheral ring shaped elements (21 b) and wherein said therapeutic blanket (1, 1') further comprises:
at least two overlapping textile strips (3') arranged along a peripheral edge portion of said first textile layer (11), and
wherein at least one of said peripheral ring shaped elements (21 b) is sandwiched and fixed (5') between said at least two overlapping textile strips.

11. The therapeutic blanket according to any one of the preceding claims, wherein the size of the interconnecting elements (23) is 20 - 75 % of the size of the ring shaped elements (21).

12. The therapeutic blanket according to any one of the preceding claims, wherein said ring shaped elements (21) and said interconnecting elements (23) are made of metal and/or a plastic material.

13. The therapeutic blanket according to any one of the preceding claims, wherein said layer of link elements (2, 2') comprises MxN ring shaped elements (21) and (M-2)x(N-2) ring shaped elements form ring shaped nodes (21 a), wherein M and N are positive integers larger than 2.
